# FASCICULE DE BREVET EUROPEEN

(11) **EP 4 422 042 B1**
(45) Date de publication et mention de la délivrance du brevet: **15.10.2025**
(21) Numéro de dépôt: 24159548.7
(22) Date de dépôt: 26.02.2024
(51) Int. Cl.: H02K 55/02, H02K 1/20, H02K 9/19

(54) **MOTEUR SUPRACONDUCTEUR COMPORTANT UN SYSTÈME DE REFROIDISSEMENT**
SUPRALEITENDER MOTOR MIT KÜHLSYSTEM
SUPERCONDUCTING MOTOR WITH COOLING SYSTEM

(30) Priorité: 27.02.2023 FR 2301800
(43) Date de publication de la demande: 28.08.2024
(73) Titulaire: Airbus, 31700 Blagnac (FR)
(72) Inventeur: COLLE, Alexandre, 31700 BLAGNAC (FR); ABDOUH, Reda, 31700 BLAGNAC (FR)
(74) Mandataire: Cabinet Le Guen Maillet

(56) Documents cités:
- JP-A- 2016 149 485
- KR-A- 20140 134 794
- US-A1- 2001 035 692
- US-A1- 2008 143 200
- US-A1- 2012 161 557
- US-A1- 2020 076 260

## Description

### DOMAINE TECHNIQUE

La présente invention se rapporte au domaine général des moteurs supraconducteurs et plus particulièrement aux moteurs supraconducteurs comportant un système de refroidissement.

### ÉTAT DE LA TECHNIQUE ANTÉRIEURE

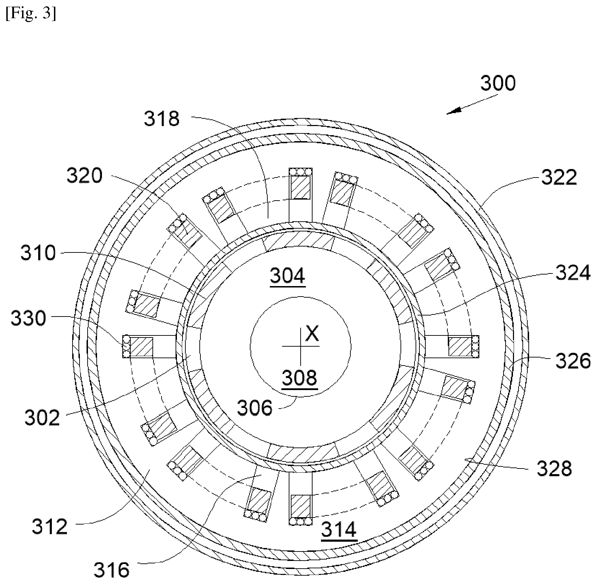

La Fig. 3 montre un moteur supraconducteur 300 de l'état de la technique où le moteur supraconducteur 300 est vu en coupe par un plan perpendiculaire à l'axe longitudinal X dudit moteur supraconducteur 300.

Le moteur supraconducteur 300 comporte un rotor 302 qui présente un cœur de rotor 304 réalisé dans un matériau ferromagnétique tel que l'ensemble des alliages de fer utilisés pour les machines électriques. Le cœur de rotor 304 est cylindrique et coaxial avec l'axe longitudinal X et il présente un alésage central 306 dans lequel est emmanché et fixé rigidement un arbre moteur 308 dudit moteur supraconducteur 300. L'arbre moteur 308 est coaxial avec l'axe longitudinal X.

Le rotor 302 comporte également des aimants permanents 310 fixés au cœur de rotor 304 sur la périphérie de ce dernier. Il y a plusieurs aimants permanents 310 (ici au nombre de six) répartis angulairement et régulièrement autour du cœur de rotor 304 et espacés les uns des autres. Classiquement, les aimants permanents 310 sont magnétisés radialement par rapport à l'axe longitudinal X et de manière alternée de proche en proche.

Le moteur supraconducteur 300 comporte un stator 312 disposé à l'extérieur du rotor 302 et comporte un cœur de stator 314 réalisé dans un matériau ferromagnétique tel que l'ensemble des alliages de fer utilisés pour les machines électriques. Le cœur de stator 314 prend une forme globalement cylindrique coaxiale avec l'axe longitudinal X.

Au niveau de sa face cylindrique qui est orientée vers le rotor 302, le cœur de stator 314 présente des fentes 316 qui ici débouchent vers le rotor 302. Il y a plusieurs fentes 316 (ici au nombre de seize) réparties angulairement et régulièrement autour du rotor 302. Les fentes 316 sont agencées par paires et les deux fentes 316 de la paire sont séparées par une dent 318 monobloc et monomatière avec le cœur de stator 314.

Pour chaque paire de fentes 316, le stator 312 comporte une bobine 320 qui est enroulée autour de la dent 318. Chaque bobine 320 est constituée d'un matériau supraconducteur.

Le rotor 302 et le stator 312 sont classiquement logés dans un boîtier moteur 322 qui est cylindrique et fermé à ses deux extrémités par des flancs dont au moins un percé d'un orifice central permettant le passage de l'arbre moteur 308. Le stator 312 est monté fixe à l'intérieur du boîtier moteur 322 tandis que le rotor 302 et l'arbre moteur 308 sont montés libres en rotation à l'intérieur du boîtier moteur 322.

En fonctionnement, chaque bobine 320 est alimentée électriquement pour générer un champ magnétique qui interagit avec les aimants permanents 310 pour les entraîner en rotation avec le rotor 302 et l'arbre moteur 308.

Le moteur supraconducteur 300 comporte un cylindre intérieur 324 et un cylindre extérieur 326 qui sont coaxiaux avec l'axe longitudinal X.

Le cylindre intérieur 324 est disposé entre le rotor 302 et le stator 312, et le cylindre extérieur 326 est disposé autour du stator 312 et à l'intérieur du boîtier moteur 322.

Le cylindre intérieur 324 et le cylindre extérieur 326 s'étendent entre les deux flancs auxquels ils sont fixés hermétiquement pour délimiter entre eux et les deux flancs, une chambre 328 dans laquelle est logé le stator 312 et qui peut être mise au vide.

Dans le cadre d'un moteur supraconducteur 300, les bobines 320 doivent être refroidies pour améliorer leur rendement. À cette fin, pour chaque fente 316, des tubes 330 sont disposés dans le fond de la fente 316 entre la bobine 320 logée dans la fente 316 et le cœur de stator 314. Ces tubes 330 sont fluidiquement connectés à une source d'un fluide réfrigérant. Le fluide réfrigérant est alors injecté dans les tubes 330 pour refroidir les bobines 320.

Le champ magnétique créé par les aimants permanents 310 est dévié par le cœur de rotor 304 et le champ magnétique induit créé par les bobines 320 est intensifié sur les supraconducteurs par la présence des fentes 316, ce qui induit une dégradation dans le fonctionnement des bobines 320 et il est souhaitable de trouver un arrangement qui améliore le rendement du moteur supraconducteur.

Les documents US 2008/143200 A1, KR-A-2014 0134794 et US-A-2001/035692 divulguent des moteurs de l'état de la technique.

### EXPOSÉ DE L'INVENTION

Un objet de la présente invention est de proposer un moteur supraconducteur comportant
- un rotor avec un cœur de rotor portant des aimants permanents et mobile en rotation autour d'un axe longitudinal,
- un stator disposé à l'extérieur du rotor et comportant un cylindre support et un cylindre magnétique, où le cylindre support est emmanché et fixé dans le cylindre magnétique, où le cylindre magnétique est réalisé dans un matériau ferromagnétique, où le cylindre support est réalisé dans un matériau amagnétique et isolant électrique, où le cylindre support est traversé par plusieurs orifices répartis angulairement et régulièrement autour du rotor, où pour chaque orifice, le cylindre magnétique présente un décrochement en profondeur à l'intérieur du cylindre magnétique et en face dudit orifice, où chaque orifice débouche au niveau de la surface extérieure du cylindre support,
- pour chaque paire d'orifices, une bobine constituée d'un matériau supraconducteur qui est enroulée en étant logée dans les orifices de la paire, et
- pour chaque décrochement, un système de refroidissement arrangé dans ledit décrochement et destiné à refroidir la partie de la bobine qui est logée dans l'orifice correspondant au décrochement.

Avec un tel arrangement, le rendement du moteur est amélioré.

Avantageusement, chaque bobine est constituée d'un ruban d'un matériau supraconducteur enroulé sur lui-même autour d'un axe d'enroulement globalement radial par rapport à l'axe longitudinal.

Avantageusement, chaque système de refroidissement est constitué d'une pluralité de tubes disposés dans le décrochement correspondant, les tubes s'étendent sur la longueur du cylindre magnétique et ils sont destinés à être fluidiquement connectés à une source d'un fluide réfrigérant.

Avantageusement, les tubes sont réalisés en métal.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue en coupe d'un moteur supraconducteur selon l'invention,
Fig. 2 est un agrandissement du détail II de la Fig. 1, et
Fig. 3 est une vue en coupe d'un moteur supraconducteur de l'état de la technique.

### EXPOSÉ DÉTAILLÉ DE MODES DE RÉALISATION

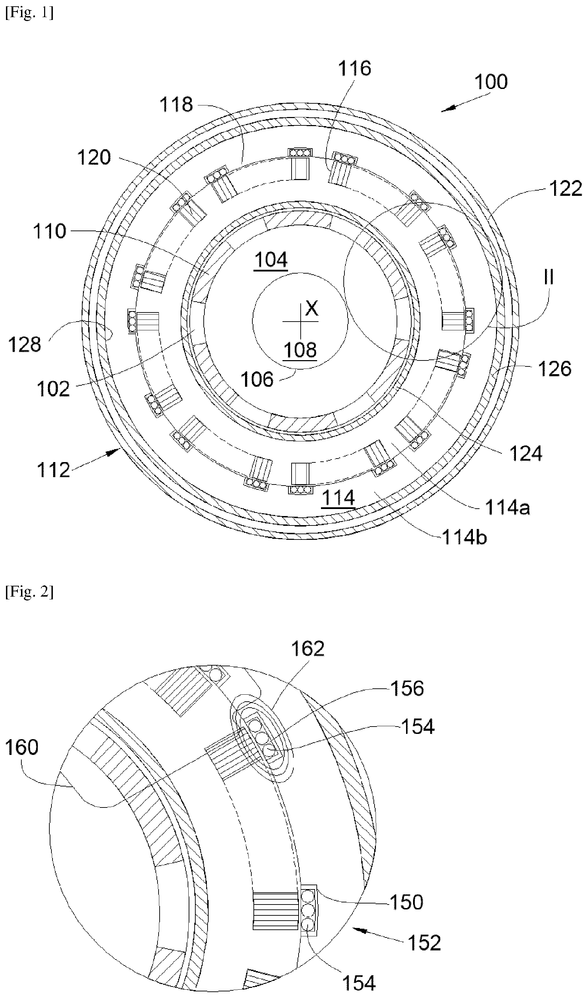

La Fig. 1 montre un moteur supraconducteur 100 selon l'invention en coupe par un plan perpendiculaire à l'axe longitudinal X du moteur supraconducteur 100 et la Fig. 2 montre un agrandissement du détail II. Le moteur supraconducteur 100 présente globalement la même structure que le moteur supraconducteur 300 de l'état de la technique.

Le moteur supraconducteur 100 comporte un rotor 102 qui est mobile en rotation autour de l'axe longitudinal X et qui présente un cœur de rotor 104 réalisé dans un matériau ferromagnétique tel que l'ensemble des alliages de fer utilisés pour les machines électriques. Le cœur de rotor 104 est cylindrique et coaxial avec l'axe longitudinal X et il présente un alésage central 106 dans lequel est emmanché et fixé rigidement un arbre moteur 108 dudit moteur supraconducteur 100. L'arbre moteur 108 est coaxial avec l'axe longitudinal X.

Le rotor 102 comporte également des aimants permanents 110 fixés au cœur de rotor 104 sur la périphérie de ce dernier. Il y a plusieurs aimants permanents 110 (ici au nombre de six) répartis angulairement et régulièrement autour du cœur de rotor 104 et espacés les uns des autres. Classiquement, les aimants permanents 110 sont magnétisés radialement par rapport à l'axe longitudinal X et de manière alternée nord-sud de proche en proche.

Le moteur supraconducteur 100 comporte un stator 112 disposé à l'extérieur du rotor 102 et comportant un cœur de stator 114. Le cœur de stator 114 est constitué de deux cylindres concentriques coaxiaux avec l'axe longitudinal X, à savoir un cylindre support 114a et un cylindre magnétique 114b, où le cylindre support 114a est emmanché et fixé dans le cylindre magnétique 114b.

Le cylindre magnétique 114b est réalisé dans un matériau ferromagnétique tel que de l'acier.

Le cylindre support 114a est réalisé dans un matériau amagnétique et isolant électrique et sert de support à des bobines 120 comme cela est expliqué ci-dessous. Selon un mode de réalisation particulier, la conductivité électrique du cylindre support 114a est inférieure à 1 S/m, et de préférence inférieur à 10⁻⁶ S/m

Le cylindre support 114a est traversé par plusieurs orifices 116 (ici au nombre de seize) répartis angulairement et régulièrement autour du rotor 102 et ils sont en nombre pair.

Pour chaque paire d'orifices 116, le moteur supraconducteur 100 comporte une bobine 120 qui est enroulée en étant logée dans les orifices 116 de la paire. Chaque bobine 120 est constituée d'un matériau supraconducteur et est constituée préférentiellement d'un ruban d'un matériau supraconducteur enroulé sur lui-même autour d'un axe d'enroulement globalement radial par rapport à l'axe longitudinal X. Les hachures représentées dans les sections des bobines 120 montrent des couches du ruban.

Dans le mode de réalisation de l'invention présenté ici, le rotor 102 et le stator 112 sont logés dans un boîtier moteur 122 qui est cylindrique et fermé à ses deux extrémités par des flancs dont au moins un percé d'un orifice central permettant le passage de l'arbre moteur 108. Le stator 112 est monté fixe à l'intérieur du boîtier moteur 122 tandis que le rotor 102 et l'arbre moteur 108 sont montés libres en rotation à l'intérieur du boîtier moteur 122.

En fonctionnement, chaque bobine 120 est alimentée électriquement par un courant alternatif pour générer un champ magnétique qui interagit avec les aimants permanents 110 pour les entraîner en rotation avec le rotor 102 et l'arbre moteur 108.

Comme pour le moteur supraconducteur 300 de l'état de la technique, le moteur supraconducteur 100, dans le mode de réalisation de l'invention présenté ici, comporte un cylindre intérieur 124 et un cylindre extérieur 126 qui sont coaxiaux avec l'axe longitudinal X.

Le cylindre intérieur 124 est disposé entre le rotor 102 et le stator 112, c'est-à-dire ici le cylindre support 114a, et le cylindre extérieur 126 est disposé autour du stator 112, c'est-à-dire ici le cylindre magnétique 114b, et à l'intérieur du boîtier moteur 122.

Le cylindre intérieur 124 et le cylindre extérieur 126 s'étendent entre les deux flancs auxquels ils sont fixés hermétiquement pour délimiter entre eux (les deux cylindres intérieur 124 et extérieur 126) et les deux flancs, une chambre 128 dans laquelle est logé le stator 112 et qui peut être mise au vide.

Les orifices 116 sont au voisinage de la périphérie extérieure du cylindre support 114a, et comme le montrent les Figs. 1 et 2, chaque orifice 116 débouche au niveau de la surface extérieure du cylindre support 114a, c'est-à-dire en vis-à-vis du cylindre magnétique 114b. Ainsi, chaque bobine 120 est disposée au voisinage du cylindre magnétique 114b, c'est-à-dire sur la périphérie extérieure du cylindre support 114a. Pour chaque orifice 116, le cylindre magnétique 114b présente un décrochement 150 en profondeur à l'intérieur du cylindre magnétique 114b. Chaque décrochement 150 s'étend angulairement autour de l'axe longitudinal X globalement sur la même étendue angulaire que l'orifice 116. Le décrochement 150 est en face de l'orifice 116 correspondant. Entre deux décrochements 150 successifs, le cylindre magnétique 114b présente une dent 118 qui reste à distance de la bobine 120. Chaque bobine 120 reste dans le volume délimité par le cylindre support 114a et les dents 118 restent au-delà du cylindre support 114a et des bobines 120.

Chaque décrochement 150 s'étend sur la longueur du cylindre magnétique 114b parallèlement à l'axe longitudinal X.

Dans chaque décrochement 150 est arrangé un système de refroidissement 152 destiné à refroidir la partie de la bobine 120 qui est logée dans l'orifice 116 correspondant au décrochement 150. Ainsi, le système de refroidissement 152 est disposé à l'extérieur des bobines 120 par rapport à l'axe longitudinal X et il interfère peu avec le champ magnétique des aimants permanents 110 d'où un meilleur rendement du moteur supraconducteur 100. Chaque système de refroidissement 152 est ainsi cerné sur trois côtés par le cylindre magnétique 114b.

Le champ magnétique créé par les aimants permanents 110 n'est pas dévié par le cylindre support 114a. Dans le cas de bobines 120 constituées d'un enroulement d'un ruban tel que cela est expliqué ci-dessus, les lignes 160 de champ du champ magnétique créé par les aimants permanents 110 sont alors globalement parallèles aux bandes du ruban, ce qui limite les pertes de performances. En outre, le champ magnétique créé par les aimants permanents 110 est dévié autour du système de refroidissement 152 du fait de la présence du cylindre magnétique 114b qui est autour dudit système de refroidissement 152. L'influence du cylindre magnétique 114b sur le champ magnétique (162) induit créé par les bobines 120 reste faible.

Tous ces éléments permettent d'avoir encore un meilleur rendement.

Chaque système de refroidissement 152 est constitué d'une pluralité de tubes 154 qui sont disposés dans le décrochement 150 correspondant, c'est-à-dire en dehors du cylindre support 114a et du cylindre magnétique 114b, et les tubes 154 s'étendent sur la longueur du cylindre magnétique 114b. Ces tubes 154 sont fluidiquement connectés à une source d'un fluide réfrigérant et le fluide réfrigérant est alors injecté dans les tubes 154 pour refroidir les bobines 120 qui sont en face desdits tubes 154.

Les tubes 154 sont réalisés dans un matériau présentant une bonne conductivité thermique, par exemple en métal comme de l'alliage de cuivre, pour réduire le gradient thermique entre le fluide réfrigérant et les bobines 120.

Selon un mode de réalisation particulier, les tubes 154 présentent une bonne conductivité thermique supérieure à 10W/m.K et une bonne conductivité électriques supérieure à 10⁶ S/m.

## Revendications

1. Moteur supraconducteur (100) comportant :
- un rotor (102) avec un cœur de rotor (104) portant des aimants permanents (110) et mobile en rotation autour d'un axe longitudinal (X),
- un stator (112) disposé à l'extérieur du rotor (102) et comportant un cylindre support (114a) et un cylindre magnétique (114b), où le cylindre support (114a) est emmanché et fixé dans le cylindre magnétique (114b), où le cylindre magnétique (114b) est réalisé dans un matériau ferromagnétique, où le cylindre support (114a) est réalisé dans un matériau amagnétique et isolant électrique, où le cylindre support (114a) est traversé par plusieurs orifices (116) répartis angulairement et régulièrement autour du rotor (102), où pour chaque orifice (116), le cylindre magnétique (114b) présente un décrochement (150) en profondeur à l'intérieur du cylindre magnétique (114b) et en face dudit orifice (116), où chaque orifice (116) débouche au niveau de la surface extérieure du cylindre support (114a),
- pour chaque paire d'orifices (116), une bobine (120) constituée d'un matériau supraconducteur qui est enroulée en étant logée dans les orifices (116) de la paire, et
- pour chaque décrochement (150), un système de refroidissement (152) arrangé dans ledit décrochement (150) et destiné à refroidir la partie de la bobine (120) qui est logée dans l'orifice (116) correspondant au décrochement (150).

2. Moteur supraconducteur (100) selon la revendication 1, **caractérisé en ce que** chaque bobine (120) est constituée d'un ruban d'un matériau supraconducteur enroulé sur lui-même autour d'un axe d'enroulement globalement radial par rapport à l'axe longitudinal (X).

3. Moteur supraconducteur (100) selon l'une des revendications 1 ou 2, **caractérisé en ce que** chaque système de refroidissement (152) est constitué d'une pluralité de tubes (154) disposés dans le décrochement (150) correspondant, **en ce que** les tubes (154) s'étendent sur la longueur du cylindre magnétique (114b) et ils sont destinés à être fluidiquement connectés à une source d'un fluide réfrigérant.

4. Moteur supraconducteur (100) selon la revendication 3, **caractérisé en ce que** les tubes (154) sont réalisés en métal.

## Patentansprüche

1. Supraleitender Motor (100), umfassend:
- einen Rotor (102) mit einem Rotorkern (104), der Permanentmagnete (110) trägt und um eine Längsachse (X) drehbeweglich ist,
- einen Stator (112), der außerhalb des Rotors (102) angeordnet ist und einen Tragzylinder (114a) und einen magnetischen Zylinder (114b) umfasst, wobei der Tragzylinder (114a) in den magnetischen Zylinder (114b) eingeführt und darin fixiert ist, wobei der magnetische Zylinder (114b) aus einem ferromagnetischen Material ausgeführt ist, wobei der Tragzylinder (114a) aus einem nicht magnetischen und elektrisch isolierenden Material ausgeführt ist, wobei der Tragzylinder (114a) von mehreren winklig und regelmäßig um den Rotor (102) verteilten Öffnungen (116) durchquert wird, wobei der magnetische Zylinder (114b) für jede Öffnung (116) eine Ausklinkung (150) in der Tiefe im Inneren des magnetischen Zylinders (114b) und gegenüber der Öffnung (116) aufweist, wobei jede Öffnung (116) an der Außenoberflüche des Tragzylinders (114a) mündet,
- für jedes Paar Öffnungen (116) eine Spule (120), die aus einem supraleitenden Material besteht und die gewickelt ist, wobei sie in den Öffnungen (116) des Paars aufgenommen ist, und
- für jede Ausklinkung (150) ein Kühlsystem (152), das in der Ausklinkung (150) ausgebildet ist und dazu bestimmt ist, den Teil der Spule (120), der in der der Ausklinkung (150) entsprechenden Öffnung (116) aufgenommen ist, zu kühlen.

2. Supraleitender Motor (100) nach Anspruch 1, **dadurch gekennzeichnet, dass** jede Spule (120) aus einem Band eines supraleitenden Materials besteht, das um eine in Bezug auf die Längsachse (X) insgesamt radiale Wickelachse aufgewickelt ist.

3. Supraleitender Motor (100) nach einem der Ansprüche 1 oder 2, **dadurch gekennzeichnet, dass** jedes Kühlsystem (152) aus einer Mehrzahl von Rohren (154) besteht, die in der entsprechenden Ausklinkung (150) angeordnet sind, dass die Rohre (154) sich über die Länge des magnetischen Zylinders (114b) erstrecken und sie dazu bestimmt sind, fluidisch mit einer Kältemittelquelle verbunden zu sein.

4. Supraleitender Motor (100) nach Anspruch 3, **dadurch gekennzeichnet, dass** die Rohre (154) aus Metall ausgeführt sind.

## Claims

1. Superconducting motor (100) comprising:
- a rotor (102), with a rotor core (104), that bears permanent magnets (110) and is rotatable about a longitudinal axis (X),
- a stator (112) disposed outside the rotor (102) and comprising a support cylinder (114a) and a magnetic cylinder (114b), wherein the support cylinder (114a) is fitted and fastened in the magnetic cylinder (114b), wherein the magnetic cylinder (114b) is made of a ferromagnetic material, wherein the support cylinder (114a) is made of a non-magnetic and electrically insulating material, wherein the support cylinder (114a) is passed through by several orifices (116) that are angularly and regularly distributed around the rotor (102), wherein, for each orifice (116), the magnetic cylinder (114b) has a deep cutout (150) inside the magnetic cylinder (114b) and facing said orifice (116), wherein each orifice (116) opens at the outer surface of the support cylinder (114a),
- for each pair of orifices (116), a coil (120) that is made up of a superconducting material and that is wound by being accommodated in the orifices (116) of the pair, and
- for each cutout (150), a cooling system (152) arranged in said cutout (150) and intended to cool that portion of the coil (120) which is accommodated in the orifice (116) corresponding to the cutout (150).

2. Superconducting motor (100) according to Claim 1, **characterized in that** each coil (120) is made up of a strip of a superconducting material that is wound on itself about an overall radial winding axis with respect to the longitudinal axis (X).

3. Superconducting motor (100) according to either of Claims 1 and 2, **characterized in that** each cooling system (152) is made up of a plurality of tubes (154) disposed in the corresponding cutout (150), and **in that** the tubes (154) extend over the length of the magnetic cylinder (114b) and are intended to be fluidically connected to a source of a refrigerant fluid.

4. Superconducting motor (100) according to Claim 3, **characterized in that** the tubes (154) are made of metal.
